# EUROPÄISCHE PATENTSCHRIFT

(11) **EP 0 624 135 B1**
(45) Veröffentlichungstag und Bekanntmachung des Hinweises auf die Patenterteilung: **12.06.1996**
(21) Anmeldenummer: 93903903.8
(22) Anmeldetag: 04.02.1993
(51) Int. Cl.: B62D 5/22

(54) **ZAHNSTANGEN-HILFSKRAFTLENKUNG, INSBESONDERE FÜR KRAFTFAHRZEUGE**
POWER-ASSISTED RACK AND PINION STEERING GEAR, ESPECIALLY FOR MOTOR VEHICLES
DIRECTION ASSISTEE A CREMAILLERE, NOTAMMENT POUR DES VEHICULES AUTOMOBILES

(30) Priorität: 06.02.1992 DE 4203335
(43) Veröffentlichungstag der Anmeldung: 17.11.1994
(73) Patentinhaber: ZF FRIEDRICHSHAFEN Aktiengesellschaft, D-88038 Friedrichshafen (DE)
(72) Erfinder: LANG, Armin, D-7070 Schwäbisch Gmünd (DE); KNÖDLER, Helmut, D-7073 Lorch (DE)
(86) Internationale Anmeldenummer: EP9300248
(87) Internationale Veröffentlichungsnummer: WO9315947

(56) Entgegenhaltungen:
- EP-A- 0 190 960
- WO-A-85/01924
- GB-A- 2 034 262
- US-A- 4 607 717

## Beschreibung

Die Erfindung betrifft eine Zahnstangen-Hilfskraftlenkung, insbesondere für Kraftfahrzeuge, nach dem Oberbegriff des Anspruchs 1. Bei einer derartigen Hilfskraftlenkung ist in einem Lenkgehäuse ein Ritzel drehbar gelagert. Eine Zahnstange ist in dem Lenkgehäuse axial verschiebbar geführt und wird durch ein federbelastetes Druckstück in Eingriff mit dem Ritzel gehalten. Zur Hilfskraftunterstützung dient ein Servomotor, der trieblich mit der Zahnstange verbunden ist. Eine Steuereinrichtung für die Steuerung eines Druckmittels zu und von dem Servomotor ist in Abhängigkeit von einer Bewegung des Ritzels verstellbar.

Eine derartige Zahnstangen-Hilfskraftlenkung ist bekannt aus der EP-B1-01 92 641. Bei dieser Ausführung entsteht durch die Schrägverzahnung des Ritzels eine Kraftkomponente auf das Ritzel in axialer Richtung, so daß das Ritzel in axialer Richtung verstellbar ist. Durch diese Axialverschiebung des Ritzels können die Steuerventile verstellt werden.

Für eine einwandfreie Funktion der Steuerventile sollte der Schrägungswinkel des Ritzels möglichst über 35 Grad liegen. Dadurch wird die Wahl der Ritzelverzahnung stark eingeschränkt. Die Betätigung der Steuerventile kann dadurch beeinträchtigt werden, daß die Querkräfte, die auf die Zahnstange wirken, sich an dem Ritzel abstützen und so die Reibung für die Axialverschiebung des Ritzels erhöhen können. Die bekannte Zahnstangen-Hilfskraftlenkung läßt sich dann nicht verwenden, wenn im Durchmesserbereich des Ritzelgehäuses nur ein begrenzter Bauraum zur Verfügung steht.

Der Erfindung liegt die Aufgabe zugrunde, die beschriebenen Mängel ohne konstruktiven Mehraufwand zu vermeiden. Insbesondere soll der Einsatz von Ritzeln mit unterschiedlichen Schrägungswinkeln möglich sein, auch mit Schrägungswinkeln, die unter 35 Grad liegen.

Diese Aufgabe wird durch die im Anspruch 1 gekennzeichnete Zahnstangen-Hilfskraftlenkung gelöst. Die Lösung erfolgt insbesondere dadurch, daß das Ritzel schwenkbar in einem Festlager und in einem Loslager gelagert ist. Dabei ist die Steuereinrichtung in der Form zweier Steuerventile ausgebildet, die im Bereich des Loslagers angeordnet sind. Die Steuerventile weisen Sitzventile auf, deren Achsen im wesentlichen senkrecht zu der Achse des Ritzels stehen. Dies bedeutet, daß zur Betätigung des Steuerventils nicht die auf das Ritzel wirkenden Axialkräfte ausgenützt werden, sondern die Querkräfte. Wird nämlich an der Lenkspindel gedreht, so wälzt sich die Verzahnung des Ritzels zunächst in der Verzahnung der noch feststehenden Zahnstange ab und bewegt damit den in dem Loslager geführten Lagerzapfen des Ritzels, so daß eines der Steuerventile verstellt wird. Durch die Verwendung von Sitzventilen in den Steuerventilen genügen ganz kleine Bewegungen des Ritzels zur Betätigung und Steuerung der Steuerventile. Durch diese minimalen Steuerwege und die damit zusammenhängenden geringen Bewegungen des Ritzels in seinem Loslager ist es möglich, das Ritzel auf einer Seite, beispielsweise auf der Lenkspindelseite, mit einem Festlager zu lagern. Der Schwenkwinkel des Ritzels ist dann so gering, daß die Schränkung innerhalb der Verzahnung im zulässigen Bereich bleibt.

Zweckmäßige und vorteilhafte Ausgestaltungen der Erfindung sind in den Unteransprüchen angegeben.

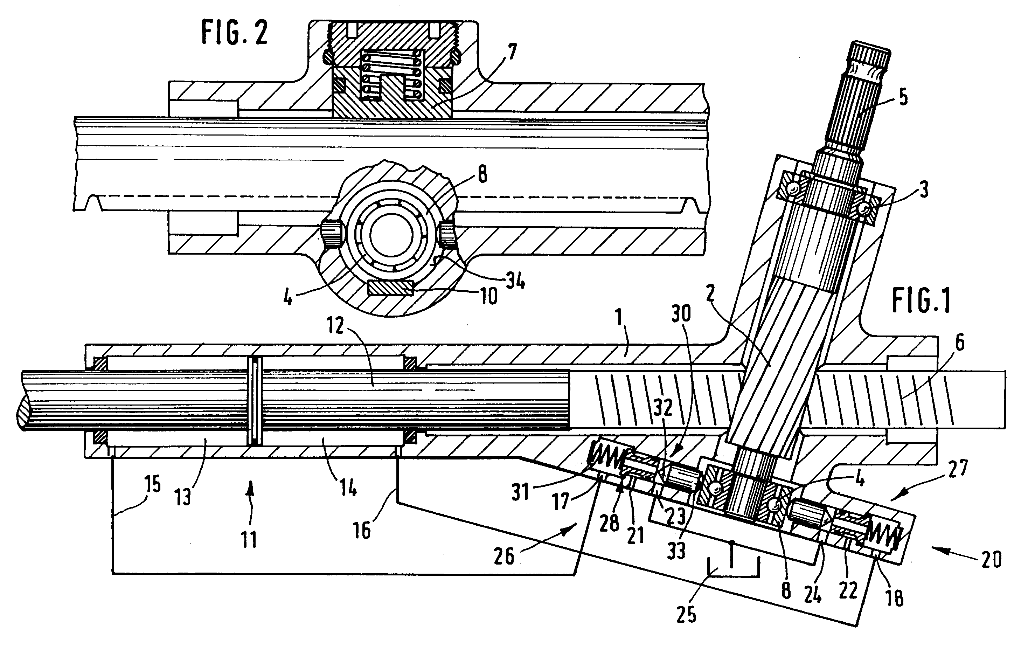

Im folgenden wird die Erfindung anhand eines in der Zeichnung dargestellten Ausführungsbeispieles näher erläutert. Es zeigt
- Fig. 1: einen Längsschnitt durch die erfindungsgemäße Zahnstangen-Hydrolenkung;
- Fig. 2: einen Teilquerschnitt durch die Zahnstangen-Hilfskraftlenkung der Fig. 1 im Bereich des Ritzels.

In einem Lenkgehäuse 1 ist ein Ritzel 2 in zwei Lagern 3 und 4 drehbar gelagert. Das Ritzel 2 trägt an seinem einen Ende einen Lenkspindelanschluß 5 für den Anschluß an ein Lenkorgan, beispielsweise eine nicht dargestellte Lenkspindel mit einem Lenkhandrad. Eines der Lager, vorzugsweise das Lager 3, das in der Nähe des Lenkspindelanschlusses 5 liegt, ist als Festlager ausgebildet. Das andere Lager, vorzugsweise das Lager 4, das dem Lenkspindelanschluß 5 abgewandt ist, ist als Loslager ausgebildet.

Das Ritzel 2 steht über seine Verzahnung in Eingriff mit einer Zahnstange 6, die in dem Lenkgehäuse 1 axial verschiebbar geführt ist. Die Zahnstange 6 wird mit Hilfe eines federbelasteten Druckstückes 7 in bekannter Weise gegen die Verzahnung des Ritzels 2 gedrückt. Das Ritzel 2 stützt sich an seiner einen Seite in dem Festlager 3 und an seiner anderen Seite über das Loslager 4 in dem Lenkgehäuse 1 ab. Vorzugsweise befindet sich zwischen dem Außenring 8 des Loslagers 4 und dem Lenkgehäuse 1 ein Druckplättchen 10, das fest mit dem Lenkgehäuse 1 verbunden ist. Das Druckplättchen 10 dient dazu, eine reibungsarme und verschleißarme Bewegung des Loslagers 4 zu ermöglichen. Der Außenring 8 des Loslagers 4 kann auf dem Druckplättchen 10 abrollen. Da die Bewegung des unteren Teiles des Ritzels 2 und des Loslagers 4 jedoch sehr klein ist, wie im weiteren Verlauf der Beschreibung erklärt werden wird, so kann man gegebenenfalls auf das Druckplättchen 10 verzichten.

Zur Hilfskraftunterstützung dient ein Servomotor 11, dessen Kolbenstange 12 fest mit der Zahnstange 6 verbunden ist. Der Servomotor 11 enthält zwei Zylinderräume 13 und 14, die über Arbeitsleitungen 15 und 16 mit zwei Zylinderanschlüssen 17 und 18 einer Steuereinrichtung 20 verbunden sind. Die Steuereinrichtung 20 weist außerdem noch zwei Zulaufanschlüsse 21 und 22 auf, an die eine nicht dargestellte Druckmittelquelle angeschlossen ist. An zwei Rücklaufanschlüssen 23 und 24 ist ein Behälter 25 angeschlossen.

Die Steuereinrichtung 20 enthält zwei Steuerventile 26 und 27, die als Sitzventile ausgebildet sind und deren Achsen im wesentlichen senkrecht zu der Achse des Ritzels 2 stehen. Die beiden Steuerventile 26 und 27 sind im Bereich des Loslagers 4 angeordnet.

Die beiden Steuerventile 26 und 27 sind im wesentlichen gleich ausgebildet. Jedes Steuerventil 26, 27 enthält ein Einlaß-Sitzventil 28 und ein Auslaß-Sitzventil 30. Das Einlaß-Sitzventil 28 ist in Neutralstellung der Lenkung durch die Kraft einer Feder 31 geschlossen gehalten. Das Auslaß-Sitzventil 30 ist in Neutralstellung geöffnet. Dadurch sind die Zylinderräume 13 und 14 mit dem Rücklauf zu dem Behälter 25 verbunden. Ein Schließkörper 32 jedes Auslaß-Sitzventils 30 besitzt einen Ventilstößel 33, der an dem Außenring 8 des Loslagers 4 anliegt.

Die Betätigungswege der Steuerventile 26 und 27 sind in der Zeichnung der Anschaulichkeit wegen übertrieben groß dargestellt. In Wirklichkeit betragen die Steuerwege nur wenige zehntel Millimeter. Der Durchmesser einer Bohrung 34 des Lenkgehäuses 1, in dem das Loslager 4 angeordnet ist, ist deshalb nur geringfügig größer als der Außendurchmesser des Außenringes 8 des Loslagers 4. Das Druckplättchen 10 kann deshalb gegebenenfalls entfallen.

Im folgenden wird die Funktion der erfindungsgemäßen Zahnstangen-Hilfskraftlenkung beschrieben: Wird durch eine Drehung des nicht dargestellten Lenkhandrades das Ritzel 2 beispielsweise im Sinne einer Rechtslenkung gedreht, so wälzt sich die Verzahnung des Ritzels 2 zunächst in der Verzahnung der momentan noch feststehenden Zahnstange 6 ab. Dadurch wird das Ritzel 2 um das Festlager 3 um einen sehr geringen Winkel geschwenkt. Das Loslager 4 wird nach links verschoben. Diese Bewegung wird über den Außenring 8 des Loslagers 4 auf den Ventilstößel 33 und damit auf den Schließkörper 32 des Auslaß-Sitzventils 30 übertragen. Der Schließkörper 30 wird so lange nach links bewegt, bis die Verbindung von der Arbeitsleitung 15 zum Behälter 25 unterbrochen ist. Mit weiterer Verschiebung des Schließkörpers 30 wird der Schließkörper des Einlaß-Sitzventils 28 gegen die Kraft der Feder 31 nach links bewegt. Dadurch wird die Verbindung von dem Zulaufanschluß 21 über die Arbeitsleitung 15 zu dem Zylinderraum 13 geöffnet. In dem Zylinderraum 13 baut sich ein Druck auf, der die Zahnstange 6 entsprechend der Bewegung an dem Lenkhandrad nach rechts schiebt. Gleichzeitig ergibt sich eine Druckkraft auf den Schließkörper des Einlaß-Sitzventils 28 in Schließrichtung und es stellt sich ein Gleichgewicht ein zwischen dem Druck in dem Zylinderraum 13 und dem Drehmoment an dem Lenkhandrad.

Durch den symmetrischen Aufbau der Steuerventile 26 und 27 ergibt sich bei entgegengesetzter Drehrichtung ein entsprechender Funktionsablauf.

### Bezugszeichen

- 1: Lenkgehäuse
- 2: Ritzel
- 3: Lager (Festlager)
- 4: Lager (Loslager)
- 5: Lenkspindelanschluß
- 6: Zahnstange
- 7: Druckstück
- 8: Außenring
- 9: -
- 10: Druckplättchen
- 11: Servomotor
- 12: Kolbenstange
- 13: Zylinderraum
- 14: Zylinderraum
- 15: Arbeitsleitung
- 16: Arbeitsleitung
- 17: Zylinderanschluß
- 18: Zylinderanschluß
- 19: -
- 20: Steuereinrichtung
- 21: Zulaufanschluß
- 22: Zulaufanschluß
- 23: Rücklaufanschluß
- 24: Rücklaufanschluß
- 25: Behälter
- 26: Steuerventil
- 27: Steuerventil
- 28: Einlaß-Sitzventil
- 29: -
- 30: Auslaß-Sitzventil
- 31: Feder
- 32: Schließkörper
- 33: Ventilstößel
- 34: Bohrung

## Patentansprüche

1. Zahnstangen-Hilfskraftlenkung, insbesondere für Kraftfahrzeuge, mit folgenden Merkmalen:
- in einem Lenkgehäuse (1) ist ein Ritzel (2) drehbar gelagert;
- eine in dem Lenkgehäuse (1) axial verschiebbar geführte Zahnstange (6) wird durch ein federbelastetes Druckstück (7) in Eingriff mit dem Ritzel (2) gehalten;
- zur Hilfskraftunterstützung ist ein Servomotor (11) trieblich mit der Zahnstange (6) verbunden;
- eine Steuereinrichtung (20) ist in Abhängigkeit von einer Bewegung des Ritzels (2) verstellbar;
- die Steuereinrichtung (20) enthält zwei Steuerventile (26, 27), die als Sitzventile ausgebildet sind,
**gekennzeichnet** durch folgende Merkmale:
- das Ritzel (2) ist schwenkbar gelagert in einem Festlager (3) und in einem Loslager (4);
- der Schwenkpunkt des Ritzels (2) liegt in dem Mittelpunkt des Festlagers (3);
- die Steuerventile (26, 27) liegen im Bereich des Loslagers (4);
- die Achsen der Steuerventile (26, 27) stehen im wesentlichen senkrecht zu der Achse des Ritzels (2);
- das Loslager (4) ist senkrecht zu seiner Achse nur in Richtung der Achsen der Steuerventile (26, 27) verschiebbar und ist auf seiner dem Druckstück (7) gegenüberliegenden Seite in dem Lenkgehäuse (1) verschiebbar geführt.

2. Zahnstangen-Hilfskraftlenkung nach Anspruch 1, dadurch **gekennzeichnet,** daß jedes Steuerventil (26, 27) ein Einlaß-Sitzventil (28) und ein Auslaß-Sitzventil (30) aufweist.

3. Zahnstangen-Hilfskraftlenkung nach Anspruch 2, dadurch **gekennzeichnet,**
- daß das Einlaß-Sitzventil (28) in Neutralstellung des Steuerventils (26, 27) geschlossen ist und
- daß das Auslaß-Sitzventil (30) in Neutralstellung des Steuerventils (26, 27) offen ist.

4. Zahnstangen-Hilfskraftlenkung nach Anspruch 3, dadurch **gekennzeichnet,** daß ein Schließkörper (32) jedes Auslaß-Sitzventils (30) einen Ventilstößel (33) besitzt, der an dem Außenring (8) des Loslagers (4) anliegt.

5. Zahnstangen-Hilfskraftlenkung nach Anspruch 4, dadurch **gekennzeichnet,** daß bei einer Lenkbewegung und damit verbundener Verstellung des Ritzels (2) und des Loslagers (4) in jeder Lenkrichtung zunächst das Auslaß-Sitzventil (30) geschlossen und danach das Einlaß-Sitzventil (28) geöffnet wird.

## Claims

1. Toothed rack auxiliary power steering mechanism, particularly for motor vehicles, with following features:
- a pinion (2) is rotatably mounted in a steering gear housing (1);
- a toothed rack (6) guided in the steering gear housing (1) so as to be axially displaceable is held in engagement with the pinion (2) by means of a spring-loaded pressure piece (7);
- a servo-motor (11) is connected to the toothed rack (6) in a motive manner for auxiliary power assistance;
- a control device (20) can be adjusted as a function of a movement of the pinion (2);
- the control device (20) contains two control valves (26, 27) which are in the form of seat valves,
characterized by following features:
- the pinion (2) is pivot-mounted in a fixed bearing (3) and in a movable bearing (4);
- the pivot point of the pinion (2) lies in the centre point of the fixed bearing (3);
- the control valves (26, 27) lie in the region of the movable bearing (4);
- the axes of the control valves (26, 27) are substantially perpendicular to the axis of the pinion (2);
- the movable bearing (4) is displaceable perpendicular to its axis only in the direction of the axes of the control valves (26, 27) and is guided so as to be displaceable in the steering gear housing (1) on its side opposite the pressure piece (7).

2. Toothed rack auxiliary power steering mechanism according to Claim 1, characterized in that each control valve (26, 27) has an intake seat valve (28) and an exhaust seat valve (30).

3. Toothed rack auxiliary power steering mechanism according to Claim 2, characterized
- in that the intake seat valve (28) is closed in neutral position of the control valve (26, 27) and
- in that the exhaust seat valve (30) is open in neutral position of the control valve (26, 27).

4. Toothed rack auxiliary power steering mechanism according to Claim 3, characterized in that a closure body (32) of each exhaust seat valve (30) has a valve plunger (33) which rests on the external ring (8) of the movable bearing (4).

5. Toothed rack auxiliary power steering mechanism according to Claim 4, characterized in that in the case of a steering movement and associated adjustment of the pinion (2) and of the movable bearing (4) in each steering direction the exhaust seat valve (30) is first closed and then the intake seat valve (28) is opened.

## Revendications

1. Direction assistée à crémaillère, notamment pour des véhicules automobiles, ayant les caractéristiques suivantes :
- dans une boîte de direction (1) est monté un pignon (2) rotatif;
- une crémaillère (6) mobile axialement guidée à l'intérieur de la boîte de direction (1) est maintenue par une pièce d'appui (7) sollicitée par un ressort, en prise avec le pignon (2);
- un servomoteur (11) est couplé opérationnellement à la crémaillère (6) pour assurer l'assistance à la direction;
- un dispositif de commande (20) peut être réglé en fonction d'un déplacement du pignon (2);
- le dispositif de commande (20) comporte deux soupapes de commande (26, 27) constituées par des soupapes à siège;
**caractérisée** par les caractéristiques suivantes :
- le pignon (2) est monté de façon pivotante dans un roulement fixe (3) et un roulement libre (4);
- le point de pivotement du pignon (2) est localisé au point central du roulement fixe (3);
- les soupapes de commande (26, 27) sont localisées dans la zone du roulement libre (4);
- les axes des soupapes de commande (26, 27) sont disposées sensiblement perpendiculairement à l'axe du pignon (2);
- le roulement libre (4) n'est mobile que dans la direction des axes des soupapes de commande (26, 27) perpendiculairement à son axe et du côté opposé à la pièce d'appui (7) il est agencé pour se déplacer guidé dans la boîte de direction (1).

2. Direction assistée à crémaillère selon la revendication 1, **caractérisée** en ce que chaque soupape de commande (26, 27) comporte une soupape à siège (28) d'arrivée et une soupape à siège (30) de départ.

3. Direction assistée à crémaillère selon la revendication 2, **caractérisée** en ce que
- la soupape à siège (28) d'arrivée est fermée dans la position neutre de la soupape de commande (26, 27) et,
- la soupape à siège de départ (30) est ouverte dans la position neutre de la soupape de commande (26, 27).

4. Direction assistée à crémaillère selon la revendication 3, **caractérisée** en ce qu'un organe de fermeture (32) de chaque soupape à siège (30) de départ comporte un poussoir de soupape (33) qui est en appui contre la bague extérieure (8) du roulement libre (4).

5. Direction assistée à crémaillère selon la revendication 4, **caractérisée** en ce que lors d'un changement de direction, entraînant un déplacement correspondant du pignon (2) et du roulement libre (4), dans chaque orientation de la direction, la soupape a siège (30) de départ est d'abord fermée et ensuite la soupape à siège (28) d'arrivée est ouverte.
